(19)

Europäisches
Patentamt
European
Patent Office
Office européen
des brevets

(11) **EP 2 006 517 A2**

(12) **EUROPEAN PATENT APPLICATION**

(43) Date of publication:
   **24.12.2008 Bulletin 2008/52**

(51) Int Cl.:
   *F02D 41/20* (2006.01)      *F02D 41/22* (2006.01)
   *H03K 17/64* (2006.01)

(21) Application number: **08011170.1**

(22) Date of filing: **19.06.2008**

(84) Designated Contracting States:
   **AT BE BG CH CY CZ DE DK EE ES FI FR GB GR
   HR HU IE IS IT LI LT LU LV MC MT NL NO PL PT
   RO SE SI SK TR**
   Designated Extension States:
   **AL BA MK RS**

(30) Priority: **20.06.2007 JP 2007162604**

(71) Applicant: **NEC Electronics Corporation
   Kawasaki, Kanagawa 211-8668 (JP)**

(72) Inventor: **Tamagawa, Akio
   Kawasaki
   Kanagawa 211-8668 (JP)**

(74) Representative: **Merkau, Bernhard
   Glawe. Delfs. Moll
   Postbox 26 01 62
   80058 Munich (DE)**

(54)   **Flyback voltage detecting circuit and apparatus and method for inductive load**

(57)   An inductive load is connected between an output node and a first power supply which supplies a first power supply voltage. An inductive load driving apparatus includes a flyback voltage generation control circuit connected in series with the inductive load through the output node between the first power supply voltage and a second power supply voltage which is lower than the first power supply voltage. The flyback voltage generation control circuit includes a switch turned on in response to a first control signal and turned off in response to a second control signal, and a flyback voltage is generated on the output node when the switch is turned off, and is not generated when the switch is turned on. The inductive load driving apparatus further includes a detecting circuit configured to supply a detection signal when the flyback voltage higher than a predetermined voltage is not generated, and to stop of the supply of the detection signal when the flyback voltage higher than the predetermined voltage is generated; and a control unit configured to sequentially output the first and second control signals to the flyback voltage generation control circuit and to receive the detection signal from the detecting circuit.

Fig. 5

## Description

### Background of the Invention

#### 1. Field of the Invention

The present invention relates to an apparatus and a method for driving an inductive load, and a flyback voltage detecting circuit used in the same.

#### 2. Description of Related Art

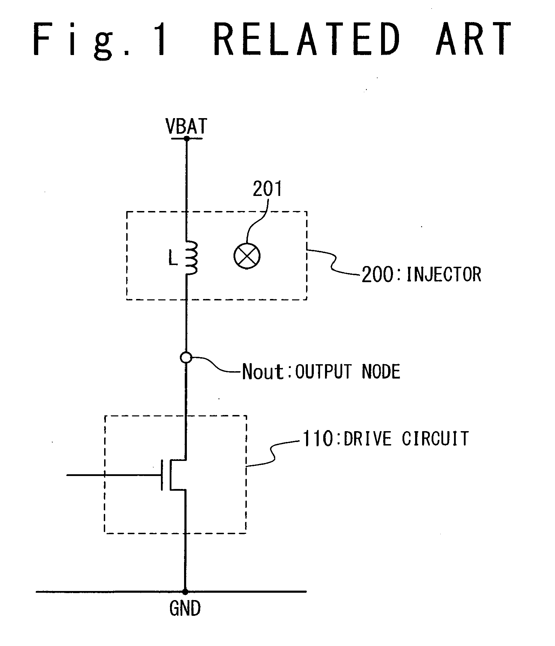

Conventionally, a fuel injection valve (injector) is used as one of engine control units for controlling an automobile engine. As shown in FIG. 1, an injector 200 has a valve 201, a mechanical spring (not illustrated), and an inductive load L. The inductive load L is a coil used in an electromagnet and is connected between a first power supply for supplying a battery voltage $V_{BAT}$ and a second power supply GND for supplying a ground voltage lower than the battery voltage. The valve 201 is closed by mechanical force of the spring. The spring is pulled with electromagnetic force generated by current flowing through the inductive load L so that the valve 201 is opened. Thus, gas is injected to the engine through the valve 201.

A driving circuit 110 is connected between the inductive load L and the second power supply GND. The driving circuit 110 is an automobile electrical device and drives the injector 200 in response to an instruction from a microcomputer. This driving circuit 110 has a semiconductor device such as a power MOSFET (Metal Oxide Semiconductor Field Effect Transistor) for a purpose of a contactless structure.

Moreover, a protection circuit as a control unit for the automobile electrical device performs a diagnosis to protect the injector 200 and notifies the diagnostic result to a microcomputer. The protection circuit includes a current limiting circuit, an overheat detecting circuit, and a break detecting circuit. Hereinafter, the break detecting circuit will be described.

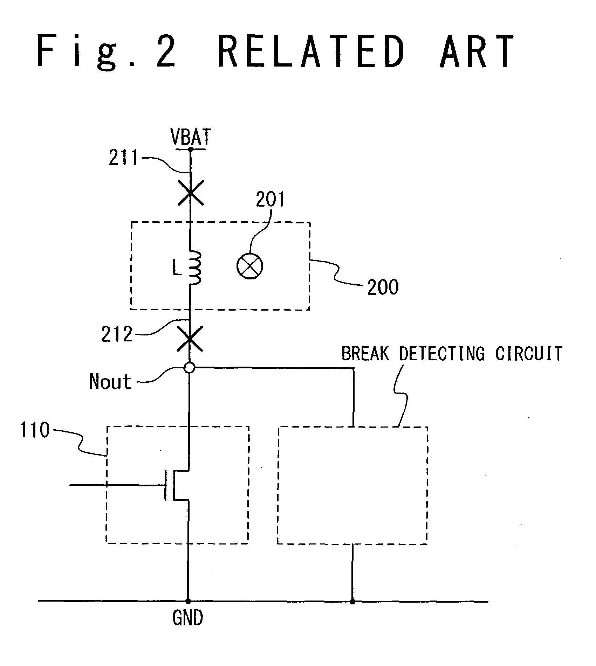

For example, as shown in FIG. 2, the break detecting circuit is connected between the inductive load L and the second power supply GND. A flyback voltage detecting circuit is exemplified as the break detecting circuit. By utilizing that the flyback voltage detecting circuit detects the flyback voltage, the microcomputer can check whether a wiring 211 between the first power supply $V_{BAT}$ and the inductive load L is broken or whether a wiring 212 between the inductive load L and the output node $N_{out}$ is broken.

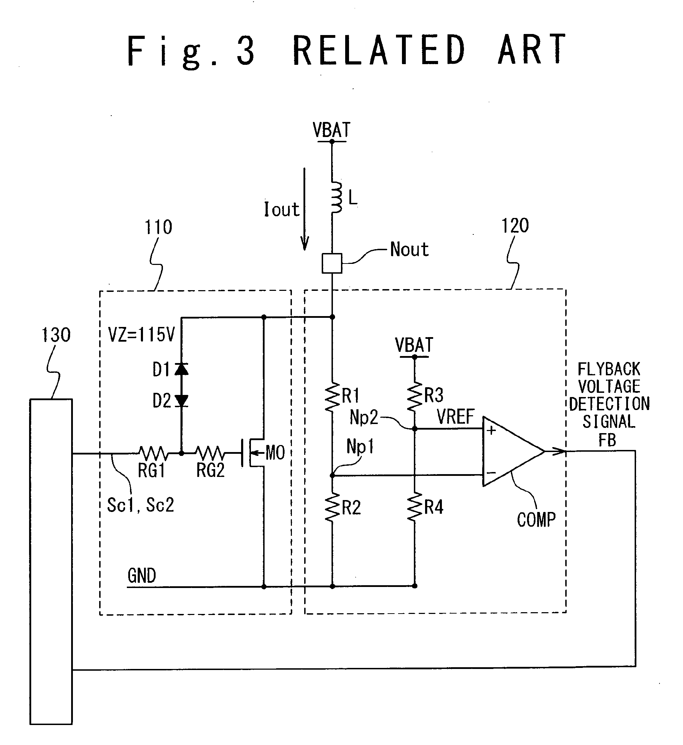

FIG. 3 is a circuit diagram showing a configuration of a conventional inductive load driving apparatus, and is a simplified diagram of a solenoid valve driving apparatus described in Japanese Patent Application Publications (JP-P2006-220069A and JP-P2006-152987A). The conventional inductive load driving apparatus has the inductive load L, the driving circuit 110, a flyback voltage detecting circuit 120, and a microcomputer 130.

The inductive load L is connected between the first power supply $V_{BAT}$ and an output node $N_{out}$.

This driving circuit 110 has a transistor MO, resistance elements $RG_1$ and $RG_2$, and a clamp circuit. The transistor MO is an N-channel power MOSFET, and is connected between the output node $N_{out}$ and the second power supply GND. The resistance elements $RG_1$ and $RG_2$ are connected in series between the microcomputer 130 and the gate of the transistor MO. Thus, a control signal $Sc_1$ or $Sc_2$ is supplied from the microcomputer 130 to the gate of the transistor MO via the resistance elements $RG_1$ and $RG_2$ as a first or a second control signal. The control signal $Sc_1$ and the control signal $Sc_2$ take a high level (active state) and a low level (inactive state), respectively. Therefore, the transistor MO is turned on in response to the control signal $Sc_1$, and is turned off in response to the control signal $Sc_2$.

The clamp circuit includes diodes $D_1$ and $D_2$ and is connected between the output node $N_{out}$ and a connection node $N_g$ between the resistance elements $RG_1$ and $RG_2$. The cathode of the diode $D_1$ is connected to the output node $N_{out}$, the anode of the diode $D_1$ is connected to the anode of the diode $D_2$, and the cathode of the diode $D_2$ is connected to the connection node Ng.

The flyback voltage detecting circuit 120 has resistance elements $R_1$, $R_2$, $R_3$, and $R_4$ as first to fourth resistance elements, and a comparator COMP. The resistance element $R_1$ and the resistance element $R_2$ are connected in series between the output node $N_{out}$ and the second power supply GND. The resistance element $R_3$ and the resistance element $R_4$ are connected in series between the first power supply $V_{BAT}$ and the second power supply GND. One of the inputs of the comparator COMP is connected to a node $Np_1$ between the resistance elements $R_1$ and $R_2$ and the other of the inputs thereof is connected a node $N_{P2}$ between the resistance elements $R_3$ and $R_4$. The output of the comparator COMP is connected to the microcomputer 130. The comparator COMP compares a voltage at the node $Np_1$ with a voltage $V_{REF}$ at the node $Np_2$, and outputs a flyback voltage detection signal FB to the microcomputer 130 based on the comparison result to indicate whether the flyback voltage $V_z$ has been generated.

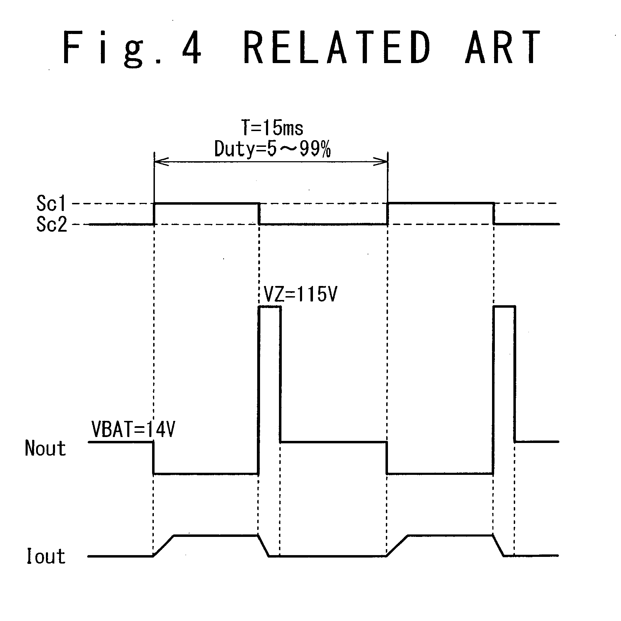

FIG. 4 is timing charts showing an operation of the conventional inductive load driving apparatus. The microcomputer 130 outputs the control signal $Sc_1$ (high level) and the control signal $Sc_2$ (low level) alternately. In this case, the transistor MO is turned on in response to the control signal $Sc_1$, and is turned off in response to the control signal $Sc_2$, as described above. When the transistor MO is turned on in response to the control signal $Sc_1$ from the microcomputer 130, energy is stored in the inductive load L by the current $I_{out}$. Also, when the transistor MO is turned off in response to the control signal $Sc_2$ from the microcomputer 130, the energy having stored in the inductive load L is outputted so that the flyback voltage $V_Z$ is generated.

Since the engine rotational frequency reaches 8000 rpm, a period during which the control signal $Sc_1$ and the control signal $Sc_2$ are outputted is about 15 ms. Moreover, a duty ratio of the control signal $Sc_1$ varies in a range of 5% to 99%, depending on a pushing degree of an accelerator. Thus, it is necessary to switch the current $I_{out}$ flowing through the inductive load L at high speed.

However, since the current $I_{out}$ decreases when the transistor MO is turned off, $Lx(di/dt)$ is generated as the flyback voltage $V_Z$ in the inductive load L. Here, it is supposed that the battery voltage from the first power supply $V_{BAT}$ is 14V and the breakdown voltages of the diodes $D_1$ and $D_2$ are about 115 V. In this case, when the transistor MO is turned off, the voltage at the output node $N_{out}$ is clamped to about 115 V, and the current $I_{out}$ decreases abruptly to 0 A within a few tens of $\mu$s.

The voltage appearing at the output node $N_{out}$ is divided by the resistance elements $R_1$ and $R_2$ and a division voltage appears at the node $Np_1$. The comparator COMP compares the division voltage at the node $Np_1$ with the reference voltage $V_{REF}$ appearing at the node $Np_2$ from the resistance elements $R_3$ and $R_4$. When the division voltage is higher than or equal to the reference voltage $V_{REF}$, the comparator COMP outputs the flyback voltage detection signal FB to the microcomputer 130 to indicate generation of the flyback voltage $V_Z$. Meanwhile, when the division voltage is lower than the reference voltage $V_{REF}$, the comparator COMP outputs the flyback voltage detection signal FB to the microcomputer 130 to indicate non-generation of the flyback voltage $V_Z$.

When outputting the control signal $Sc_2$, the microcomputer 130 receives the flyback voltage detection signal FB from the comparator COMP. At this time, if the flyback voltage detection signal FB indicates the generation of the flyback voltage $V_Z$, the microcomputer 130 detects that there is no break of connection between the first power supply $V_{BAT}$ and the output node $N_{out}$.

In this way, in the conventional inductive load driving apparatus, the flyback voltage detecting circuit 120 detects generation of the flyback voltage by the inductive load L, and the microcomputer 130 can check whether a wiring between the first power supply $V_{BAT}$ and the inductive load L and a wiring between the inductive load L and the driving circuit 110 are not broken.

In conjunction with the above description, a technique relating to the flyback voltage is described in Japanese Patent Application Publications (JP-P2006-220069A and JP-P2006-152987A). Japanese Patent Application Publication (JP-P2000-184582A) describes a solenoid driving apparatus. In this solenoid driving apparatus, when supply of power to the solenoid is stopped, current due to a counter electromotive force is made to circulate in a circulation circuit, and thereby the flyback voltage is absorbed. For this purpose, in the solenoid driving apparatus, the flyback voltage is monitored, to detect a break of the circulation circuit.

According to a conventional inductive load driving apparatus, the flyback voltage detecting circuit 120 has the resistance elements $R_1$, $R_2$, $R_3$, and $R_4$ and the comparator COMP. The comparator COMP compares the divisional voltage by the resistance elements $R_1$ and $R_2$ with the reference voltage $V_{REF}$ generated by the battery voltage $V_{BAT}$ and the resistance elements $R_3$ and $R_4$ and outputs the flyback voltage detection signal FB to the microcomputer 130 to indicate that the flyback voltage $V_Z$ has been generated. However, since the reference voltage $V_{REF}$ is generated by the battery voltage and the resistance elements $R_3$ and $R_4$, the flyback voltage detection signal FB will be largely affected by the battery voltage (power supply voltage). That is, since the reference voltage $V_{REF}$ is proportional to the battery voltage, when a variation is caused in the power supply voltage, a variation will be also caused in the reference voltage $V_{REF}$. The detection accuracy of the flyback voltage $V_Z$ by the flyback voltage detecting circuit 120 will fall due to the reference voltage $V_{REF}$.

**Summary**

Therefore, an object of the present invention is to provide an inductive load driving apparatus including a break detecting circuit, in which whether a wiring between a battery voltage and an output node is broken can be detected by using flyback voltage.

In an aspect of the present invention, an inductive load driving apparatus is provided, in which an inductive load is connected between an output node and a first power supply which supplies a first power supply voltage. The inductive load driving apparatus includes a flyback voltage generation control circuit connected in series with the inductive load through the output node between the first power supply voltage and a second power supply voltage which is lower than the first power supply voltage, wherein the flyback voltage generation control circuit includes a switch turned on in response to a first control signal and turned off in response to a second control signal, and a flyback voltage is generated on the output node when the switch is turned off, and is not generated when the switch is turned on. The inductive load driving apparatus further includes a detecting circuit configured to supply a detection signal when the flyback voltage higher than a predetermined voltage is not generated, and to stop of the supply of the detection signal when the flyback voltage higher than the predetermined voltage is generated; and a control unit configured to sequentially output the first and second control signals to the flyback voltage generation control circuit and to receive the detection signal from the detecting circuit.

Another aspect of the present invention, a break detecting circuit includes a biasing section having first and second resistance elements connected in series between an output node and a ground voltage, and configured to output a division voltage from a node between the first and second resistance elements; wherein an inductive load is interposed between a battery voltage and the output node, and a flyback voltage is generated on the output node; a load section connected to the battery voltage and configured to supply a detection signal; and a detection transistor connected between the load section and the ground voltage, wherein the detection transistor is turned on based on the division voltage when the flyback voltage higher than a predetermined voltage is generated, such that the supply of the detection signal is stopped, and the detection transistor is turned off based on the division voltage when the flyback voltage higher than the predetermined voltage is not generated, such that the detection signal is supplied.

Thus, according to the inductive load driving apparatus of the present invention, a flyback voltage detecting circuit detects a flyback voltage generated by the inductive load, and the microcomputer 30 can check whether a wiring between the first power supply $V_{BAT}$ and the output node $N_{out}$ is broken. Also, according to the inductive load driving apparatus of the present invention, the number of components can be reduced smaller than that of the conventional apparatus.

**Brief Description of the Drawings**

The above and other objects, advantages and features of the present invention will be more apparent from the following description of certain embodiments taken in conjunction with the accompanying drawings, in which:

FIG. 1 is a circuit diagram showing a general fuel injection valve (injector) 200 and a driving circuit 110;
FIG. 2 shows a break detecting circuit as one example of a protection circuit for protecting the injector 200;
FIG. 3 shows a configuration of a conventional inductive load driving apparatus;
FIG. 4 shows timing charts of an operation of the conventional inductive load driving apparatus;
FIG. 5 is a circuit diagram showing a configuration of an inductive load driving apparatus according to a first embodiment of the present invention;
FIG. 6 shows timing charts of an operation of the inductive load driving apparatus according to the first embodiment of the present invention;
FIG. 7 shows a relation of current I and voltage V in an inverter in a flyback voltage detecting circuit 20 of the inductive load driving apparatus according to the first embodiment of the present invention;
FIG. 8 shows a configuration of the inductive load driving apparatus according to a second embodiment of the present invention;
FIG. 9A is a circuit diagram showing the inverter when the load is a constant current source;
FIG. 9B shows a relation of current I and voltage V in the inverter of FIG. 9A;
FIG. 10A is a circuit diagram showing the inverter when the load is a constant current source; and
FIG. 10B shows a relation of current I and voltage V in the inverter of FIG. 10A.

**Description of the Preferred Embodiments**

Hereinafter, an inductive load driving apparatus of the present invention will be described in detail with reference to the attached drawings.

[First Embodiment]

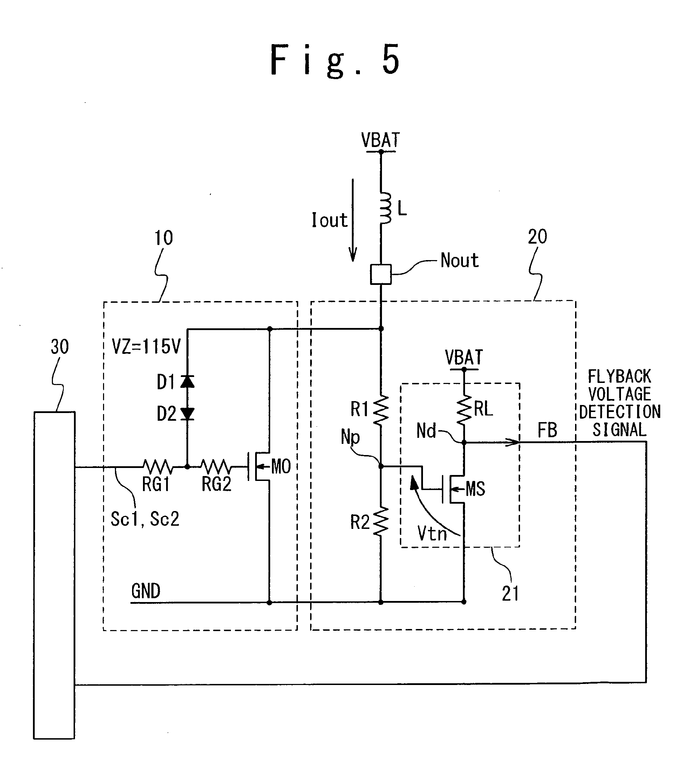

FIG. 5 is a circuit diagram showing a configuration of the inductive load driving apparatus according to a first embodiment of the present invention. The inductive load driving apparatus has an inductive load L, a driving circuit 10, a flyback voltage detecting circuit 20, and a microcomputer 30.

The inductive load L is a coil for an electromagnet, and is connected between a first power supply $V_{BAT}$ for supplying a battery voltage and an output node $N_{out}$. The inductive load L is provided for an injector, and the injector has a valve and a mechanical spring in addition to the inductive load L. The valve is closed by mechanical force of the spring. By a current flowing through the inductive load L, the spring is pulled by electromagnetic force of the coil, so that the valve is opened. At this moment, gas is injected into an engine through the valve.

The driving circuit 10 has a transistor MO, resistance elements $RG_1$ and $RG_2$, and a clamp circuit. The transistor MO is an N-channel power MOSFET (Metal Oxide Semiconductor Field Effect Transistor), and is connected between the output node $N_{out}$ and a second power supply GND for supplying a ground voltage lower than the battery voltage. A control signal $Sc_1$ or $Sc_2$ is supplied to the gate of the transistor MO from the microcomputer 30 as a first or second control signal. The control signal $Sc_1$ and the control signal $Sc_2$ take a high level (active state) and a low level (inactive state), respectively. Therefore, the transistor MO is turned on in response to the control signal $Sc_1$, and is turned off in response to the control signal $Sc_2$.

The clamp circuit includes diodes $D_1$ and $D_2$ and is connected between the output node $N_{out}$ and a node Ng between the resistance elements $RG_1$ and $RG_2$. The cathode of the diode $D_1$ is connected to the output node $N_{out}$. The anode of the diode $D_2$ is connected to the anode of the diode $D_1$, and the cathode of the diode $D_1$ is connected a node Ng between the resistance elements $RG_1$ and $RG_2$. When the transistor MO is turned off, the clamp circuit ($D_1$, $D_2$) generates a flyback voltage $V_z$ to emit the energy (current $I_{out}$) stored in the inductive load L.

The flyback voltage detecting circuit 20 includes the resistance elements $R_1$ and $R_2$ as first and second resistance elements, and an inverter 21 for flyback voltage detection. The resistance element $R_1$ and the resistance element $R_2$ are connected in series between the output node $N_{out}$ and the second power supply GND, and divide a voltage supplied to the output node $N_{out}$.

The inverter 21 for flyback voltage detection checks a break of connection between the first power supply $V_{BAT}$ and the output node $N_{out}$. The inverter 21 has a load resistance $R_L$ and a transistor MS for voltage detection. The load resistance $R_L$ is connected between the first power supply $V_{BAT}$ and the node Nd, and supplies a constant current as a flyback voltage detection signal when the transistor MS is turned off and stops the supply of the flyback voltage detection signal when the transistor MS is turned on.

The transistor MS is an N-channel power MOSFET, and is connected between the node $N_d$ and the second power supply GND. The transistor MS monitors the voltage supplied to the output node $N_{out}$. In order that the transistor MS may monitor the voltage supplied to the output node $N_{out}$, the node $N_p$ is connected to the gate of the transistor MS. The transistor MS is turned off when the voltage at the node $N_p$ is lower than a threshold voltage of the transistor MS, that is, when the flyback voltage is lower than a predetermined voltage such as a clamp voltage of the clamp circuit. At this time, the flyback voltage detection signal FB is supplied to the microcomputer 30 via the node $N_d$, to indicate that the flyback voltage $V_z$ has not been generated. Also, the transistor MS is turned on when the voltage at the node $N_p$ is equal to or higher than the threshold voltage of the transistor MS, that is, when the flyback voltage is equal to or higher than the predetermined voltage such as the clamp voltage of the clamp circuit. At this time, the flyback voltage detection signal FB is not supplied to the microcomputer 30 via the node $N_d$, to indicate that the flyback voltage $V_z$ has been generated.

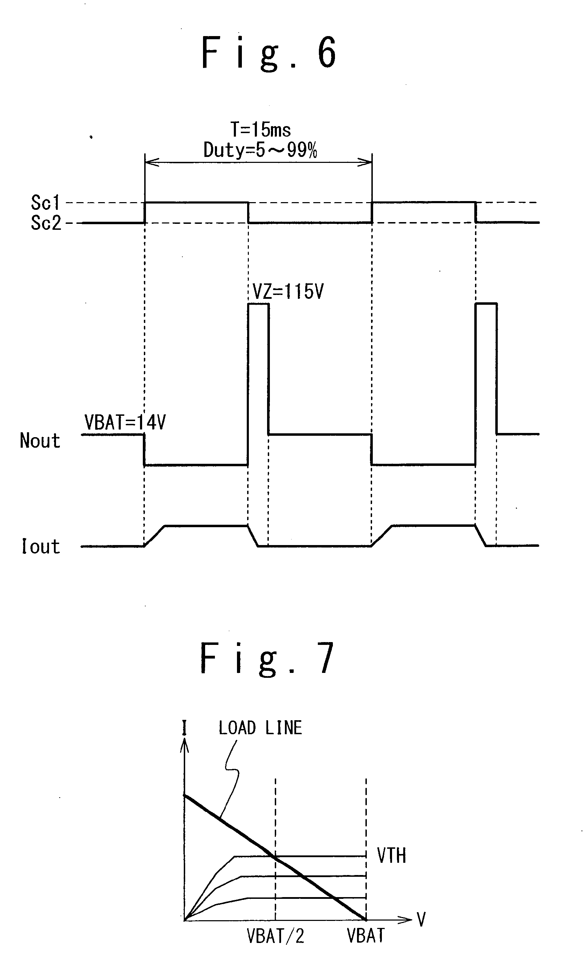

FIG. 6 shows timing charts of an operation of the inductive load driving apparatus of the present invention. The microcomputer 30 alternately outputs the control signal $Sc_1$ of the high level and the control signal $Sc_2$ of the low level. In this case, as described above, the transistor MO is turned on in response to the control signal $Sc_1$, and is turned off in response to the control signal $Sc_2$. When the microcomputer 30 outputs the control signal $Sc_2$, the transistor MO is turned off, and accordingly the flyback voltage $V_z$ is generated by the inductive load L, and the clamp circuit ($D_1$, $D_2$) functions such that the energy stored in the inductive load L is forcefully consumed.

When the engine rotational frequency reaches 8000 rpm, the period of a set of the control signal $Sc_1$ and the control signal $Sc_2$ is about 15 ms. Moreover, a duty ratio of the control signal $Sc_1$ varies in a range of 5% to 99% depending on a pushing degree of an acceleration pedal. Thus, it is necessary to switch the current $I_{out}$ stored in the inductive load L at high speed.

However, since the current $I_{out}$ flowing through the inductive load L decreases if the transistor MO is turned off, the flyback voltage $V_z$ of $L \times (di/dt)$ is generated by the inductive load. It is supposed that the breakdown voltages of the diodes $D_1$ and $D_2$ are about 115 V and the battery voltage supplied by the first power supply $V_{BAT}$ is 14 V. In this case, when the transistor MO is turned off, the voltage appearing at the output node $N_{out}$ is clamped to about 115 V, and the current $I_{out}$ decreases abruptly to 0 A within a few tens of $\mu$s.

The voltage appearing at the output node $N_{out}$ is divided by the resistance elements $R_1$ and $R_2$. The division voltage obtained through such division is supplied to the inverter 21 composed of the load resistance $R_L$ and the transistor MS via the node $N_p$.

A threshold voltage (inverter threshold voltage) of the inverter 21 is determined based on mobility of electrons in the transistor MS, a capacitance per unit area of an oxide film, a channel width, channel length, and threshold voltage in the transistor MS, a resistance value of the load resistance $R_L$, and the battery voltage. The inverter threshold voltage is proportional to a root of the battery voltage. This will be described later.

The voltage appearing at the output node $N_{out}$ is divided by the resistance element $R_1$ and the resistance element $R_2$, and the division voltage obtained through the division is supplied to the node $N_p$. When the division voltage supplied to the node $N_p$ is larger than or equal to the threshold voltage of the inverter 21, the transistor MS outputs the flyback voltage detection signal FB to indicate generation of the flyback voltage $V_z$ to the microcomputer 30 via the node $N_d$. Meanwhile, when the division voltage described above is lower than the inverter threshold voltage, the transistor MS outputs the flyback voltage detection signal FB to the microcomputer 30 via the node $N_d$ to indicate non-application of the flyback voltage $V_z$.

When outputting the control signal $Sc_2$, the microcomputer 30 receives the flyback voltage detection signal FB from the inverter 21. At this time, if the flyback voltage detection signal FB indicates the application of the flyback voltage $V_z$, the microcomputer 130 detects that there is no break of the connection between the first power supply $V_{BAT}$ and the output node $N_{out}$.

Thus, according to the inductive load driving apparatus by the first embodiment of the present invention, by the flyback voltage detecting circuit 20 detecting the flyback voltage generated by the inductive load L, the microcomputer 30 can check whether a wiring between the first power supply $V_{BAT}$ and the output node $N_{out}$ is broken.

The flyback voltage detecting circuit 120 of the conventional inductive load driving apparatus includes resistance elements $R_1$, $R_2$, $R_3$, and $R_4$ and a comparator COMP, whereas the flyback voltage detecting circuit 20 includes the resistance elements $R_1$ and $R_2$, and the inverter 21 (namely, the load resistance $R_L$ and the transistor MS). For this reason, in the inductive load driving apparatus according to the first embodiment of the present invention, the number of components can be reduced smaller than that of the conventional device.

In the inductive load driving apparatus according to the first embodiment of the present invention, the flyback voltage detecting circuit 20 includes the resistance elements $R_1$ and $R_2$ and the inverter 21 composed of the load resistance $R_L$ and the transistor MS, as described above. The inverter 21 obtains the flyback voltage detection signal FB that indicates whether the flyback voltage $V_z$ has been generated by comparing the division voltage obtained by dividing the voltage applied to the output node $N_{out}$ by the resistance elements $R_1$ and $R_2$ and the threshold voltage (inverter threshold voltage) of the inverter 21, and outputs it to the microcomputer 30 via the node $N_d$. In the flyback voltage detecting circuit 120 of the conventional inductive load driving apparatus, the reference voltage $V_{REF}$ is proportional to the battery voltage, whereas in the flyback voltage detecting circuit 20, the inverter threshold voltage (reference voltage) is determined by the transistor MS, the load resistance $R_L$, and the battery voltage, and is proportional to a root of the battery voltage. For this reason, in the inductive load driving apparatus according to the first embodiment of the present invention, even when a variation is caused in the battery voltage (power supply voltage), a variation in the reference voltage is reduced smaller than that of the conventional device. The reduction of the variation in the reference voltage improves an accuracy with which the flyback voltage detecting circuit 20 detects the flyback voltage $V_z$, higher than that of the conventional device.

As described above, the effects will be described in detail using the equations.

First, a drain current of the transistor MS is determined. It is presumed that the battery voltage is designated by $V_{BAT}$; the mobility of electrons in the transistor MS, the capacitance per unit area of the oxide film in the transistor Ms, the channel width, the channel length, and the threshold voltage of the transistor MS are $\mu$, Cox, W, L, and $V_{tn}$, respectively, a voltage between the gate and the source of the transistor MS is Vgs; and the drain current of the transistor MS is Id. In this case, the drain current Id is expressed by the following equation (1) .

$$Id = \frac{1}{2} \times \mu \times C_{ox} \times \frac{W}{L} \times (V_{gs} - V_{tn})^2 \qquad (1)$$

Next, a current flowing through the load resistance $R_L$ is determined. A resistance value of the load resistance $R_L$ is supposed to be $R_L$, and a current flowing through the load resistance $R_L$ is supposed to be $I_{RL}$. FIG. 7 shows a relation of a current I and a voltage V in the inverter 21. In this case, as shown in FIG. 7, when the output voltage (inverter output voltage) of the inverter 21 is a half of the power supply voltage (battery voltage $V_{BAT}$), i.e., $V_{BAT}/2$, the current $I_{RL}$ is expressed by the following equation (2):

$$I_{RL} = \frac{V_{BAT}}{2 \times RL} \qquad (2)$$

Here, the inverter threshold voltage is supposed to be $V_{TH}$. In this case, if the inverter threshold voltage $V_{TH}$ is defined as a value when the inverter output voltage becomes a half of the power supply voltage, the equation (1) is equivalent to the equation (2), as shown by the following equation (3). This equation (3) is developed into the following equation (4), and the inverter threshold voltage $V_{TH}$ is expressed by the following equation (5).

$$Id = \frac{1}{2} \times \mu \times C_{ox} \times \frac{W}{L} \times (V_{TH} - V_{tn})^2 = \frac{V_{BAT}}{2 \times RL} \qquad (3)$$

$$V_{TH} - V_{tn} = \sqrt{\frac{V_{BAT}}{RL} \times \frac{L}{\mu \times C_{ox} \times W}} \qquad (4)$$

$$V_{TH} = V_{tn} + \sqrt{\frac{V_{BAT}}{RL} \times \frac{L}{\mu \times C_{ox} \times W}} \qquad (5)$$

Thus, in the flyback voltage detecting circuit 20, the inverter threshold voltage $V_{TH}$ (reference voltage) is determined by the transistor MS, the load resistance $R_L$, and the battery voltage $V_{BAT}$, and is proportional to a root of the battery voltage $V_{BAT}$.

Next, the voltage at the output node $N_{out}$ is determined. The resistance values of the resistance element $R_1$ and the resistance element $R_2$ are supposed to be $R_1$ and $R_2$, respectively, and the voltage at the output node $N_{out}$ is supposed to be $V_{out}$. In this case, as shown in the following equation (6), it is assumed that the division voltage obtained by dividing the voltage at the node by using the resistance element $R_1$ and the resistance element $R_2$ is equal to the inverter threshold voltage $V_{TH}$. The equation (5) is substituted into the equation (6), and the equation (6) is developed into the following equation (7):

$$\frac{R_2}{R_1 + R_2} \times V_{out} = V_{TH} \qquad (6)$$

$$\frac{R_2}{R_1 + R_2} \times V_{out} = V_{tn} + \sqrt{\frac{V_{BAT}}{RL} \times \frac{L}{\mu \times C_{ox} \times W}} \qquad (7)$$

Therefore, when the flyback voltage detection signal FB indicates the application of the flyback voltage $V_z$, the voltage $V_{out}$ at the output node $N_{out}$ is expressed by the following equation (8).

$$V_{out} = \frac{R_1 + R_2}{R_2} \times \left( V_{tn} + \sqrt{\frac{V_{BAT}}{RL} \times \frac{L}{\mu \times C_{ox} \times W}} \right) \qquad (8)$$

In the conventional inductive load driving apparatus, since the reference voltage $V_{REF}$ is proportional to the battery voltage $V_{BAT}$, a voltage $V_{out}$ when the flyback voltage detection signal FB indicates the application of the flyback voltage $V_z$ is also proportional to the battery voltage $V_{SAT}$. Meanwhile, in the inductive load driving apparatus according to the first embodiment of the present invention, since the inverter threshold voltage $V_{TH}$ (reference voltage) is proportional to the root of the battery voltage $V_{BAT}$, the voltage $V_{out}$ when the flyback voltage detection signal FB indicates the application of the flyback voltage $V_z$ is also proportional to the root of the battery voltage $V_{BAT}$. Thus, in the inductive load driving apparatus according to the first embodiment of the present invention, even when a variation is caused in the battery voltage $V_{BAT}$, the variation in the reference voltage is reduced smaller than that of the conventional apparatus. The reduction of the variation in the reference voltage improves the detection accuracy of the flyback voltage $V_z$ by the flyback voltage detecting circuit 20, to be higher than that of the conventional apparatus.

[Second Embodiment]

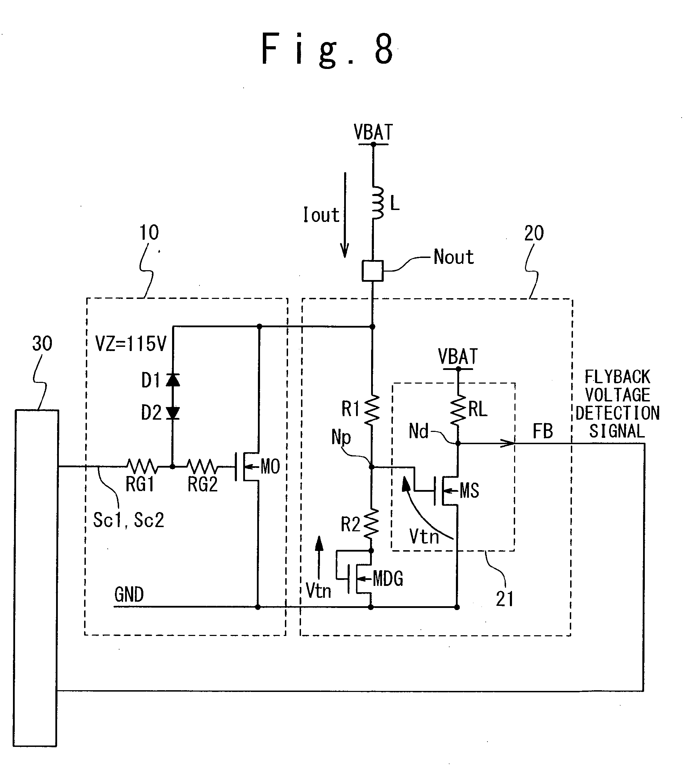

FIG. 8 shows a configuration of the inductive load driving apparatus according to a second embodiment of the present invention. In the inductive load driving apparatus in the second embodiment, the same description as that of the first embodiment is omitted.

The flyback voltage detecting circuit 20 further has a transistor MDG for variation prevention. The transistor MDG is an N-channel power MOSFET, and is connected between the resistance element $R_2$ and the second power supply GND. In this case, the gate of the transistor MDG is connected to the drain thereof. The transistor MDG prevents the variation in a threshold voltage $V_{tn}$ of the transistor MS. The variation in the threshold voltage also includes a variation by temperature.

An operation of the inductive load driving apparatus according to the second embodiment of the present invention are the same as described above.

The inductive load driving apparatus according to the second embodiment of the present invention can attain the above-described effects.

The effect will be described in detail using equations.

First, a method of determining the inverter threshold voltage $V_{TH}$ is the same as the above-mentioned equations (1) to (5).

Next, the voltage $V_{out}$ at the output node $N_{out}$ is determined. A voltage applied across the transistor MDG is supposed to be the threshold voltage $V_{tn}$. In this case, as shown in the following equation (9), it is assumed that a sum of the voltage $V_{tn}$ applied across the transistor MDG and the voltage applied across the resistance element $R_2$ is equal to the inverter threshold voltage $V_{TH}$. The equation (9) is developed into the following equation (10):

$$V_{tn} + (V_{out} - V_{tn}) \times \frac{R_2}{R_1 + R_2} = V_{TH} \quad (9)$$

$$V_{out} = \frac{R_1 + R_2}{R_2} \times (V_{TH} - V_{tn}) + V_{tn} \quad (10)$$

Therefore, when the flyback voltage detection signal FB indicates the application of the flyback voltage $V_z$, the voltage $V_{out}$ applied to the output node $N_{out}$ is expressed by the following equation (11). In this case, the equation (10) is developed into the equation (11) by substituting the equation (5) into the equation (10) .

$$V_{out} = \frac{R_1 + R_2}{R_2} \times \sqrt{\frac{V_{BAT}}{RL} \times \frac{L}{\mu \times C_{ox} \times W}} + V_{tn} \quad (11)$$

Even in this case, in the inductive load driving apparatus according to the second embodiment of the present invention, since the inverter threshold voltage $V_{TH}$ (reference voltage) is proportional to the root of the battery voltage $V_{BAT}$, the voltage $V_{out}$ when the flyback voltage detection signal FB indicates the generation of the flyback voltage $V_z$ is also proportional to the root of the battery voltage $V_{BAT}$. In this way, in the inductive load driving apparatus according to the second embodiment of the present invention, even when the variation is caused in the battery voltage $V_{BAT}$, the variation in the reference voltage is reduced smaller than that of the conventional apparatus. The reduction of the variation in the reference voltage improves the detection accuracy of the flyback voltage $V_z$ by the flyback voltage detecting circuit 20 to be higher than that of the conventional apparatus.

It should be noted that in the present invention, neither the transistor MO (switch) of the driving circuit 10 nor the transistor MS of the inverter 21 in the flyback voltage detecting circuit 20 are limited to the field effect transistor (MOSFET), but they may be a bipolar transistor, or may be an insulated gate bipolar transistor.

In the present invention, the load resistance element $R_L$ of the inverter 21 is not limited to a resistance element, but may be a constant current source (not shown). In this case, as a constant current source, there are two types of MOSFET: a depletion MOSFET and an enhancement MOSFET.

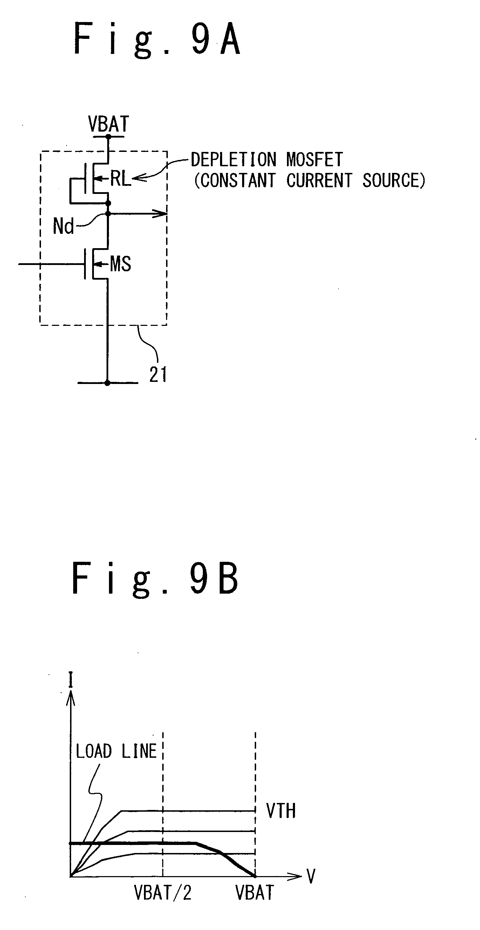

FIG. 9A shows the inverter 21 when the load resistance element $R_L$ is a constant current source (depletion MOSFET). In this case, the depletion MOSFET is an N-channel power MOSFET, and is connected between the first power supply $V_{BAT}$ and the node $N_d$. The depletion MOSFET has its gate and source being connected, and generates a constant current. FIG. 9B shows a relation of a current I and a voltage V in the inverter 21. In the present invention, since the constant current source (depletion MOSFET) is used as shown in FIG. 9A, the inverter threshold voltage $V_{TH}$ (reference voltage) is not affected by the battery voltage $V_{BAT}$ as shown in FIG. 9B.

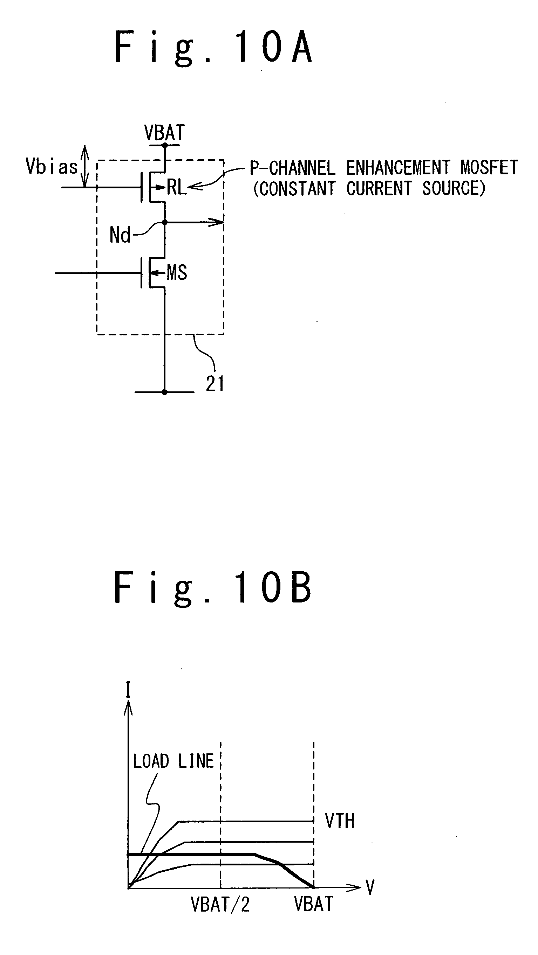

FIG. 10A shows the inverter 21 when the load resistance element $R_L$ is a constant current source (enhancement MOSFET). In this case, the enhancement MOSFET is a P-channel power MOSFET, and is connected between the first power supply $V_{BAT}$ and the node $N_d$. This enhancement MOSFET is supplied with a constant voltage Vbias to its gate, and generates a constant current. FIG. 10B shows a relation of current I and voltage V in the inverter 21 described above. In the present invention, since the constant current source (enhancement MOSFET) is used as shown in FIG. 10A, the inverter threshold voltage $V_{TH}$ (reference voltage) is not affected by the battery voltage $V_{BAT}$ as shown in FIG. 10B.

Although the present invention has been described above in connection with several embodiments thereof, it would be apparent to those skilled in the art that those embodiments are provided solely for illustrating the present invention, and should not be relied upon to construe the appended claims in a limiting sense.

**Claims**

1. An inductive load driving apparatus, wherein an inductive load is connected between an output node and a first power supply which supplies a first power supply voltage, said inductive load driving apparatus comprising:

   a flyback voltage generation control circuit connected in series with said inductive load through said output node between said first power supply voltage and a second power supply voltage which is lower than said first power supply voltage, wherein said flyback voltage generation control circuit comprises a switch turned on in response to a first control signal and turned off in response to a second control signal, and a flyback voltage is generated on said output node when said switch is turned off, and is not generated when said switch is turned on;
   a detecting circuit configured to supply a detection signal when the flyback voltage higher than a predetermined voltage is not generated, and to stop of the supply of the detection signal when the flyback voltage higher than the predetermined voltage is generated; and
   a control unit configured to sequentially output the first and second control signals to said flyback voltage generation control circuit and to receive the detection signal from said detecting circuit.

2. The inductive load driving apparatus according to claim 1, wherein said detecting circuit comprises:

   a biasing section comprising first and second resistance elements connected in series between said output node and the second power supply voltage, and configured to output a division voltage from a node between said first and second resistance elements;
   a load section connected to the first power supply voltage and configured to supply said detection signal; and
   a detection transistor connected between said load section and the second power supply voltage, wherein said detection transistor is turned on based on the division voltage when the flyback voltage higher than the predetermined voltage is generated, such that the supply of said detection signal is stopped, and said detection transistor is turned off based on the division voltage when the flyback voltage higher than the predetermined voltage is not generated, such that said detection signal is supplied.

3. The inductive load driving apparatus according to claim 2, wherein said detecting circuit further comprises:

   an n-type MOS transistor interposed between said second resistance element and the second power supply voltage, and having a gate connected to a drain of said n-type MOS transistor.

4. The inductive load driving apparatus according to claim 2 or 3, wherein the first power supply voltage is a battery voltage, and said load section comprises a load resistance element.

5. The inductive load driving apparatus according to claim 2 or 3, wherein said load section comprises an N-type depletion MOSFET.

6. The inductive load driving apparatus according to claim 2 or 3, wherein said load section comprises a P-type enhancement MOSFET.

7. The inductive load driving apparatus according to any of claims 2 to 4, wherein the flyback voltage applied to said output node is expressed by the following equation:

$$V_{out} = \frac{R_1 + R_2}{R_2} \times \left( Vtn + \sqrt{\frac{V_{BAT}}{R_L} \times \frac{L}{\mu \times C_{ox} \times W}} \right)$$

Where $V_{BAT}$ is the first power supply voltage, R1, R2 and R1 are said first resistance element, said second resistance element, and a load resistance element, $\mu$ is mobility of electrons in said detection transistor, and Cox, W, an L are a thickness of a gate oxide film, a width of a channel and a length of the channel in said detection transistor.

8. The detecting circuit used in inductive load driving apparatus according to any of claims 1 to 7.

9. A method of driving an inductive load, which is connected between an output node and a first power supply which supplies a first power supply voltage, said method comprising:

sequentially generating first and second control signals;
turning on a switch in response to the first control signal so that a flyback voltage is not generated;
supplying a detection signal when the flyback voltage higher than a predetermined voltage is not generated;
turning off said switch in response to the second control signal, such that the flyback voltage is generated on said output node; and
stopping of the supply of the detection signal when the flyback voltage higher than the predetermined voltage is generated.

# Fig. 1 RELATED ART

VBAT

201

L

200 : INJECTOR

Nout : OUTPUT NODE

110 : DRIVE CIRCUIT

GND

# Fig. 2 RELATED ART

# Fig.3 RELATED ART

VBAT

Iout

L

Nout

110

120

VZ=115V

D1

D2

130

VBAT

R1
Np2
Np1

R3
VREF

FLYBACK
VOLTAGE
DETECTION
SIGNAL
FB

+

−

MO

RG1    RG2

Sc1, Sc2

R2

R4

COMP

GND

EP 2 006 517 A2

# Fig.4 RELATED ART

14

# Fig. 5

# Fig. 6

T=15ms
Duty=5～99%

Sc1
Sc2

VZ=115V

VBAT=14V

Nout

Iout

# Fig. 7

I    LOAD LINE

VTH

VBAT/2    VBAT    V

Fig. 8

# Fig. 9A

VBAT

RL — DEPLETION MOSFET
(CONSTANT CURRENT SOURCE)

Nd

MS

21

# Fig. 9B

I

LOAD LINE

VTH

VBAT/2    VBAT    V

# Fig. 10A

VBAT

Vbias

RL — P-CHANNEL ENHANCEMENT MOSFET
(CONSTANT CURRENT SOURCE)

Nd

MS

21

# Fig. 10B

I

LOAD LINE

VTH

VBAT/2    VBAT

V

**EP 2 006 517 A2**

**Patent documents cited in the description**

- JP P2006220069 A
- JP P2006152987 A
- JP P2000184582 A